# EUROPEAN PATENT SPECIFICATION

(11) **EP 1 734 261 B1**
(45) Date of publication and mention of the grant of the patent: **30.04.2008**
(21) Application number: 06380172.4
(22) Date of filing: 15.06.2006
(51) Int. Cl.: F16B 2/06, F16B 7/04, E04B 1/58

(54) **Anchoring system between profiles**
Befestigungssystem für Profile
Système d'ancrage pour profilés

(30) Priority: 16.06.2005 ES 200501464
(43) Date of publication of application: 20.12.2006
(73) Proprietor: Ibisate Gracia, Alfredo Javier, 01012 Vitoria (ES)
(72) Inventor: Ibisate Gracia, Alfredo Javier, 01012 Vitoria (ES)
(74) Representative: Carvajal y Urquijo, Isabel

(56) References cited:
- GB-A- 461 953
- US-A1- 2004 179 894

## Description

### Field of the Invention

The present invention relates to an anchoring system between profiles which is carried out without welding operations and without having to make boreholes on said profiles. The anchoring system of the invention is especially applicable in the formation of structures in which the profiles rest on each other and can intersect forming any angle.

Such an anchoring system is known from GB 461 953 A.

### Backaround of the Invention

In the manufacture of structures or frameworks of any type on the basis of profiles, the anchoring between the same can be carried out by means of welding and also by means of boreholes made in the profiles which intersect in coinciding positions for introducing screws, threaded bolts, rivets, etc. This system of joining has the drawback that it requires carrying out the drilling operations with a prior calculation for accuracy in the position thereof.

The use of grooved profiles is also known for anchoring the profiles in one of which a special threaded piece is assembled which screws in another piece adapted to the second profile. This system has the advantage that it does not require drilling operations, but it requires the use of a special profile.

Further, US 2004/179 894 A1 shows a device for clamping bars.

### Description of the Invention

The object of the present invention is to be able to carry out the anchoring between profiles resting on each other and generally intersecting with each other forming any angle, without having to make boreholes in the profiles and without said profiles having means for the fastening of ancillary joining pieces. The system of the invention is further applicable in the anchoring of profiles regardless of the nature and section thereof, both when the profiles are of open section, for example of an I-shaped, U-shaped section, etc., and when the sections are tubular.

On the other hand, as it is not necessary to make boreholes in the profiles no weakening occurs in the section thereof, thus the system of the invention is especially applicable to the anchoring of profiles of composite materials, for example those based on resins and fibres, although it can also be applied with metal profiles.

The system of the invention is based on the arrangement of at least two plates, each of which resting in an opposing direction on each of the profiles that are to be connected or anchored. These plates partially project from the profiles in coinciding portions for introducing a threaded bolt which can be fixed by means of a nut.

This arrangement will allow, for example, the joining of two overlaid profiles.

As regards the profiles which rest on and intersect with each other forming any angle, according to the system of the invention two parallel coplanar plates are arranged resting on each profile in opposing directions. These plates also partially project from the profile on which they rest in proportions which intersect with the plates resting on the other profile, the plates having in the intersecting portions opposing openings through which threaded fixing bolts are introduced, for example by means of nuts.

Whatever the case, the boreholes of the plates will preferably be positioned so that the fixing bolts rest laterally on the profiles which they are to join or anchor.

Furthermore, the plates can have, on their opposing surfaces, complements of a height approximately equal to the gap between the plates once they are assembled on the profiles and traversed by the connecting screws.

### Brief Description of the Drawings

The features of the invention are set forth below in greater detail with the aid of the attached drawings in which a preferred embodiment is shown and in which:
Figure 1 shows a side elevational view of two profiles overlaid and joined with the system of the invention.
Figure 2 shows a cross-section according to section line II-II of Figure 1.
Figure 3 shows a plan view of the assembly of Figure 1.
Figure 4 shows a plan view of two profiles of open section which intersect each other perpendicularly, joined by means of the system of the invention.
Figure 5 shows a section according to section line V-V of Figure 4.
Figure 6 shows an upper plan of two tubular profiles which intersect each other perpendicularly and are joined with the system of the invention.
Figure 7 shows a section according to section line VIII-VIII of Figure 6.
Figure 8 shows an upper plan view of one of the plates or flats forming part of the system of the invention.
Figure 9 shows a profile view of the plate or flat of Figure 8.

### Detailed Description of a Preferred Embodiment

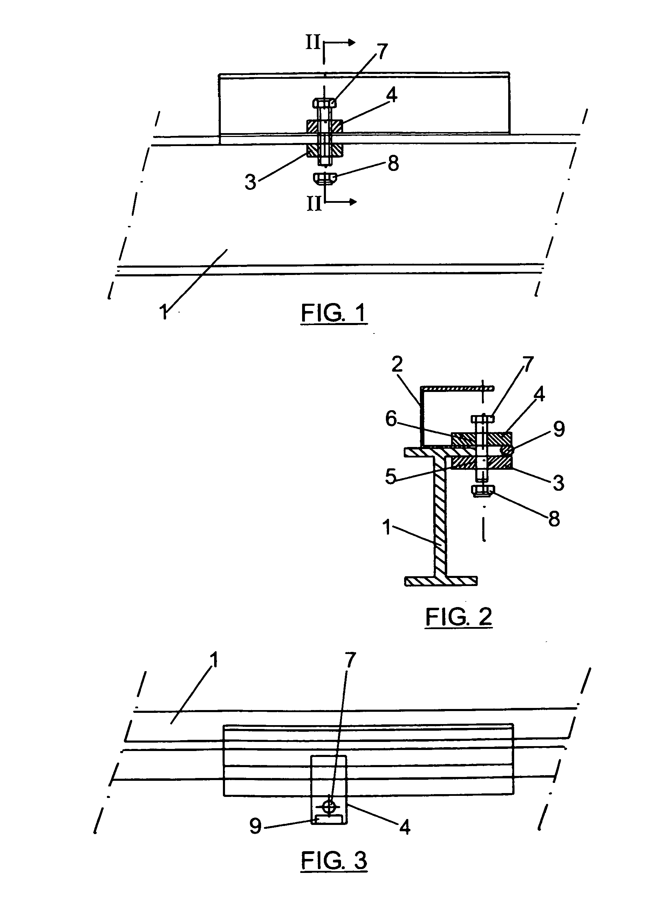

Figures 1 to 3 show two longitudinally overlaid profiles, the lower one referenced with number 1, I-shaped profile, and the other upper one referenced with number 2, C-shaped section. As can be better seen in Figure 2, the upper profile 2 rests on the upper flanges of profile 1 through one of its flanges.

The joining between these two profiles is carried out by means of two rectangular plates or flats, referenced with numbers 3 and 4, each of which rests on one of the profiles 1 and 2, in opposing directions. Plate 3 rests in an upward direction on one of the flanges of profile 1, whereas plate 4 rests in a downward direction on one of the side branches of profile 2. These plates 3 and 4 partially project from the profiles 1 and 2 by portions in which respective opposing openings 5 and 6 are arranged for the passage of a bolt or screw 7 which can be fixed by means of a nut 8.

Preferably one of the plates 3 or 4, at least, will have on opposing surfaces a complement 9 of a height or thickness approximately equal to that which plates 3 and 4 will have when assembled on profiles 1 and 2 and traversed by the connecting screw 7.

With the set-up described, on tightening the nut 8, plates 4 and 3 will compress the flanges of the profiles 1 and 2 on which they rest and the complement 9 will be used for obtaining the maximum effectiveness in the pressure or action that plates 3 and 4 exert on the flanges of the profiles 1 and 2 which they clamp.

The plates 3 and 4 with the arrangement described form a grip, by means of which a perfect anchoring or fastening of profiles 1 and 2 can be carried out.

If desired, plates 3 and 4 can also have on their opposing surfaces, in the portions resting on profiles 1 and 2, rough areas or finishes ensuring their adherence to the profiles on which they rest, avoiding risks of accidental sliding.

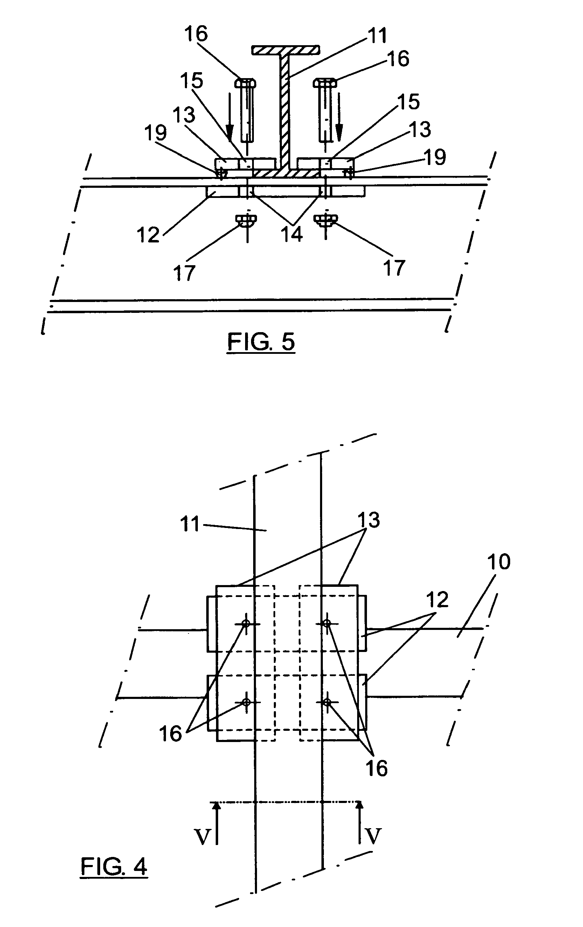

Figures 4 and 5 show two profiles 10 and 11 of an I-shaped section resting on and perpendicularly intersecting each other. The anchoring or joining between these two profiles is carried out by means of two pairs of plates 12 and 13, each of which rests in opposing directions on one of profiles 10 and 11. The two plates of each pair are coplanar to each other.

The pair of plates 12 rests in an upward direction on the upper flanges of profile 10. On the other hand, plates 13 rest in a downward direction on the lower flanges of profile 11. Plates 12 and 13 perpendicularly intersect each other, as do profiles 10 and 11 and they partially project from said profiles in portions having openings 14 and 15 which can be aligned to receive screws or bolts 16 which can be fastened or tightened by means of nuts 17.

With the arrangement described a grip is formed by plates 12 and 13 and screws 16, the tightening of which achieves applying pressure on the support flanges between profiles 10 and 11, in the intersection area, such that a perfect anchoring is obtained.

As in the previous case, plates 12 and 13 can have on their opposing surfaces complements 19 of a thickness approximately equal to the gap between the plates and the flanges of the profile on which they do not rest for obtaining the maximum effectiveness and action on tightening the nuts 17 of the screws 16.

An alternative example is provided (not shown in the drawings), similar to that described in reference to Figures 4 and 5, but in which profiles 10 and 11 intersect forming an angle different from 90°. The arrangement of plates 12 and 13 will be as in the case described previously, resting on the upper flanges of profile 10 and the lower ones of profile 11, respectively. Plates 10 and 12 will also have opposing openings for the passage of screws 16. Moreover, the plates can have the complements 19, all of this in a form coinciding to that described in reference to Figures 4 and 5.

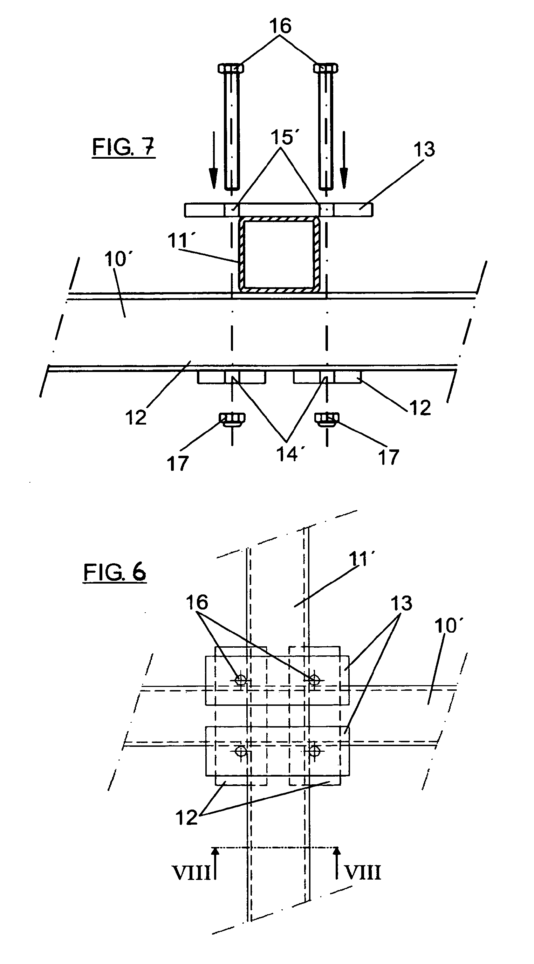

Figures 6 and 7 are views similar to those of Figures 4 and 5, but showing two tubular profiles resting perpendicularly on each other and the fastening of which is obtained by means of two pairs of plates 12 and 13 resting transversally on profiles 10' and 11', also partially projecting therefrom in portions in which they have openings 14' and 15' for introducing screws 16 that can be fixed by means of nuts 17. In this case plates 12 and 13 can lack the complements which include the plates of the example of Figures 4 and 5.

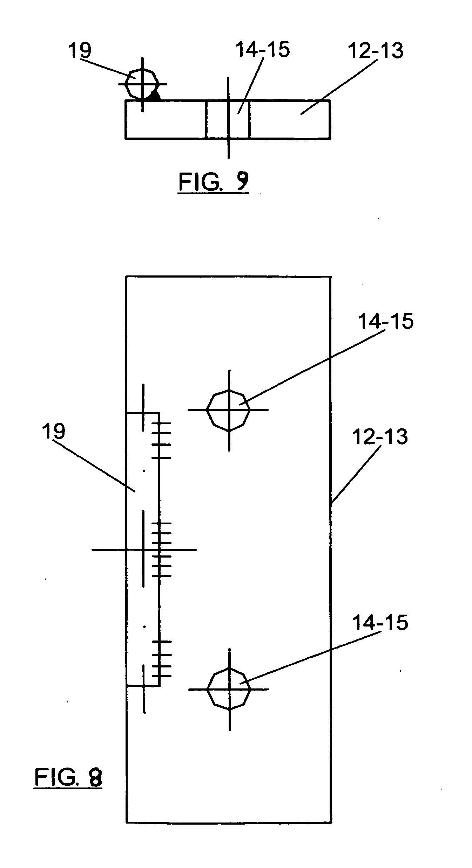

Figures 8 and 9 show one of the plates used in the anchoring system of any of the examples described in reference to Figures 3 to 7. These plates 12-13 are provided with openings 14-15 and have the complement 19. The openings 14-15 will preferably be made such that on forming the anchoring, the screws 16 rest laterally against profiles 10 and 11 or 10' and 11' that are to be joined.

The system of the invention therefore allows carrying out the joining or anchoring between profiles resting on each other longitudinally or transversally, forming any angle, without needing to make any borehole in said profiles, the system thus being particularly applicable in structures or frameworks formed by profiles obtained from composite materials, for example resin fibres.

## Claims

1. An anchoring system between profiles (1, 2, 10, 11, 10', 11'), especially for the formation of frameworks or structures in which the profiles rest on each other and can intersect with each other forming any angle, **characterized in that** it consists of arranging at least one plate (3, 4, 12, 13) resting on each profile, in opposing directions in the two profiles, which plates partially project from the profiles in coinciding portions provided with opposing boreholes (5, 6, 14, 15, 14', 15') for the passage of a threaded bolt (7,16) fixed by means of a nut (8,17).

2. A system according to claim 1, **characterized in that** two parallel coplanar plates (3, 4, 12, 13) arranged, resting on each profile (1, 2, 10, 11, 10', 11') in opposing directions, which plates partially project from the profile on which they rest in portions intersecting with the plates resting on the other profile, the plates being provided with opposing openings (5, 6, 14, 15, 14', 15') in the portions in which they intersect each other, through which threaded bolts (7,16) can be fixed by means of nuts (8,17).

3. A system according to claims 1 or 2, **characterized in that** the profiles (1,2,10,11) are of open section and have longitudinal flanges on which the plates (3, 4, 12, 13) rest.

4. A system according to claims 1 or 2, **characterized in that** the profiles (10', 11') are of tubular section and the plates (12,13) rest externally on said profiles.

5. A system according to claims 1 or 2, **characterized in that** the boreholes (5, 6, 14, 15, 14', 15') of the plates (3, 4, 12, 13) are positioned so that the fixing bolts (7,16) laterally rest on the profiles (1, 2, 10, 11, 10', 11') they anchor.

6. A system according to claims 1 or 2, **characterized in that** the plates (3, 4, 12, 13) have on their opposing surfaces complements (9,19) resting on each other or on the profiles (1, 2, 10, 11, 10', 11'), the complements of which are of a thickness equal to the gap between the plates, as they are assembled on the profiles and traversed by the connecting screws (7,16).

## Patentansprüche

1. Verbindungssystem zwischen Profilen (1, 2, 10, 11, 10', 11'), insbesondere zur Bildung von Rahmen oder Strukturen, bei denen die Profile aufeinander lagern und einander unter Bildung eines beliebigen Winkels kreuzen können, **dadurch gekennzeichnet, dass** es aus dem Anordnen mindestens einer auf jedem Profil lagernden Platte (3, 4, 12, 13) in entgegengesetzten Richtungen in den beiden Profilen besteht, wobei die Platten teilweise aus den Profilen in zusammentreffenden Abschnitten vorstehen, die mit gegenüberliegenden Bohrlöchern (5, 6, 14, 15, 14',15') für den Durchgang eines Gewindebolzens (7, 16) bereitgestellt sind, der mittels einer Mutter (8, 17) befestigt wird.

2. System nach Anspruch 1, **dadurch gekennzeichnet, dass** zwei parallel und koplanar liegende Platten (3, 4, 12, 13) angeordnet sind, die auf jedem Profil (1, 2, 10, 11, 10', 11') in entgegengesetzten Richtungen lagern, wobei die Platten teilweise aus dem Profil vorstehen, auf dem sie in Abschnitten lagern, die die auf dem anderen Profil lagernden Platten kreuzen, wobei die Platten mit gegenüberstehenden Öffnungen (5, 6, 14, 15, 14', 15') in den Abschnitten bereitgestellt sind, in denen sie einander kreuzen, durch die Gewindebolzen (7, 16) mittels Muttern (8, 17) befestigt werden können.

3. System nach Anspruch 1 oder 2, **dadurch gekennzeichnet, dass** die Profile (1, 2, 10, 11) einen offenen Querschnitt aufweisen und mit länglichen Flanschen ausgestattet sind, auf denen die Platten (3, 4, 12, 13) lagern.

4. System nach Anspruch 1 oder 2, **dadurch gekennzeichnet, dass** die Profile (10', 11') einen röhrenförmigen Querschnitt aufweisen und die Platten (12, 13) außen auf den Profilen lagern.

5. System nach Anspruch 1 oder 2, **dadurch gekennzeichnet, dass** die Bohrlöcher (5, 6, 14, 15, 14', 15') der Platten (3, 4, 12, 13) so angeordnet sind, dass die Befestigungsbolzen (7, 16) seitlich auf den Profilen (1, 2, 10, 11, 10', 11') lagern, die sie verbinden.

6. System nach Anspruch 1 oder 2, **dadurch gekennzeichnet, dass** die Platten (3, 4, 12, 13) auf ihren gegenüberliegenden Flächen Ergänzungen (9, 19) aufweisen, die aufeinander oder auf den Profilen (1, 2, 10, 11, 10', 11') lagern, wobei die Ergänzungen eine Dicke aufweisen, die dem Zwischenraum zwischen den Platten entspricht, wenn sie sie auf den Profilen angeordnet sind und von den Verbindungsschrauben (7, 16) durchquert werden.

## Revendications

1. Système d'ancrage entre des profils (1, 2, 10, 11, 10', 11'), notamment pour la formation de châssis ou de structures dans lesquels les profils reposent les uns sur les autres et peuvent se croiser les uns avec les autres en formant n'importe quel angle, **caractérisé en ce qu'**il consiste à agencer au moins une plaque (3, 4, 12, 13) reposant sur chaque profil, suivant des directions opposées dans les deux profils, les plaques faisant partiellement saillie à partir des profils dans des parties qui coïncident pourvues d'alésages opposés (5, 6, 14, 15, 14', 15') pour le passage d'un boulon fileté (7, 16) fixé au moyen d'un écrou (8, 17).

2. Système selon la revendication 1, **caractérisé en ce que** deux plaques parallèles coplanaires (3, 4, 12, 13) sont agencées en reposant sur chaque profil (1, 2, 10, 11, 10', 11') suivant des directions opposées, les plaques faisant partiellement saillie à partir du profil sur lequel elles reposent dans des parties qui se croisent avec les plaques reposant sur l'autre profil, les plaques étant pourvues d'ouvertures opposées (5, 6, 14, 15, 14', 15') dans des parties dans lesquelles elles entrent en intersection les unes avec les autres, à travers lesquelles des boulons filetés (7, 16) peuvent être fixés au moyen d'écrous (8, 17).

3. Système selon la revendication 1 ou 2, **caractérisé en ce que** les profils (1, 2, 10, 11) constituent une section ouverte et ont des brides longitudinales sur lesquelles les plaques (3, 4, 12, 13) reposent.

4. Système selon la revendication 1 ou 2, **caractérisé en ce que** les profils (10', 11') constituent une section tubulaire et les plaques (12, 13) reposent de manière externe sur lesdits profils.

5. Système selon la revendication 1 ou 2, **caractérisé en ce que** les alésages (5, 6, 14, 15, 14', 15') des plaques (3, 4, 12, 13) sont positionnés de sorte que les boulons de fixation (7, 16) reposent latéralement sur les profils (1, 2, 10, 11, 10', 11') qu'ils ancrent.

6. Système selon la revendication 1 ou 2, **caractérisé en ce que** les plaques (3, 4, 12, 13) ont sur leurs surfaces opposées des éléments complémentaires (9, 19) qui reposent les uns sur les autres ou sur les profils (1, 2, 10, 11, 10', 11'), les éléments complémentaires de celles-ci ayant une épaisseur qui est égale à l'espace entre les plaques, quand elles sont montées sur les profils et traversées par les vis de jonction (7, 16).
